# EUROPÄISCHE PATENTSCHRIFT

(11) **EP 3 171 068 B1**
(45) Veröffentlichungstag und Bekanntmachung des Hinweises auf die Patenterteilung: **27.12.2017**
(21) Anmeldenummer: 16198941.3
(22) Anmeldetag: 15.11.2016
(51) Int. Cl.: F16M 11/08, F16M 11/10, F16M 13/02

(54) **DREH- UND SCHWENKGELENK MIT EINER DREHACHSE UND EINER SCHWENKACHSE**
ROTATING AND PIVOT JOINT WITH A ROTATIONAL AXIS AND A PIVOTING AXLE
ARTICULATION ROTATIVE ET PIVOTANTE COMPRENANT UN AXE DE ROTATION ET UN AXE DE PIVOTEMENT

(30) Priorität: 23.11.2015 AT 509952015
(43) Veröffentlichungstag der Anmeldung: 24.05.2017
(73) Patentinhaber: B&R Industrial Automation GmbH, 5142 Eggelsberg (AT)
(72) Erfinder: Daxecker, Thomas, 5144 St. Georgen am Fillmannsbach (AT)
(74) Vertreter: Patentanwälte Pinter & Weiss OG

(56) Entgegenhaltungen:
- EP-A1- 0 496 191
- WO-A1-2014/009188
- DE-U1- 20 021 626

## Beschreibung

Die gegenständliche Erfindung betrifft ein dichtes Dreh- und Schwenkgelenk mit einer Drehachse und einer Schwenkachse, vorzugsweise zur Anbindung eines Tragarms an einem Bedienelement.

Im industriellen Umfeld werden Bedienelemente, wie Anzeigegeräte, Schaltfelder, Steuergeräte, Ein-/Ausgabegeräte, usw., verwendet, um Fertigungsmaschinen oder Fertigungsstraßen zu überwachen und zu steuern. Solche Bedienelemente unterliegen dabei hohen Anforderungen an die Robustheit und insbesondere auch an die Dichtheit, um eine einfache Reinigung der Fertigungsmaschine oder Fertigungsstraße samt Bedienelement zu ermöglichen. Oftmals werden die Oberflächen beim Reinigen einfach mit einem Hochdruckreinigungsstrahl abgespritzt. Das Eindringen von Reinigungsmittel, oder allgemein von Flüssigkeiten, in das Bedienelement muss dabei verhindert werden, da das Bedienelemente ansonsten durch die eindringende Flüssigkeit beschädigt oder zerstört werden könnte.

Solche Bedienelemente werden häufig auf Tragarmen angeordnet, die beispielsweise von der Decke hängen oder an Maschinenteilen angeordnet sind. Hierzu ist es in der Regel auch erwünscht, dass die Position des Bedienelements einstellbar ist, um eine einfache Anpassung an das Bedienpersonal oder an lokale Gegebenheiten zu ermöglichen. Oftmals ist dazu ein Drehgelenk vorgesehen, mit dem das Bedienelement relativ zum Tragarm um die Achse des Tragarms verdrehbar ist. Ein Beispiel dafür findet sich in der WO 2014/009188 A1. Darin ist ein Tragarmanschluss eines Bedienfeldes beschrieben, in den ein Tragarm steckbar ist und dabei ein Drehgelenk mit großem Schwenkbereich ausgebildet wird. Am Tragarm ist zusätzlich ein Dichtring angeordnet, der zwischen Tragarm und Tragarmaufnahme am Bedienfeld abdichtet und somit ein Eindringen von Flüssigkeit in das Bedienfeld unterbindet.

Ein solches Drehgelenk alleine ist aber oftmals nicht ausreichend, um eine flexible Einstellung eines Bedienelements zu ermöglichen. Daher sind häufig auch Schwenkgelenke vorgesehen, um ein Verschwenken des Bedienelements um eine Achse normal auf die Achse des Tragarms zu ermöglichen. Das bedeutet aber zwangsweise, dass der Tragarm nicht mehr am Bedienelement befestigt werden kann, da ein starrer, durch das Gelenk durchreichender Tragarm ein derartiges Verschwenken unmöglich machen würde oder einen aufwendigen Schwenkmechanismus des Bedienelements bedingen würde. Wird das Bedienelement nicht direkt am Tragarm angeordnet, wie z.B. in der WO 2014/009188 A1 kann aber an dieser Stelle auch nicht mehr abgedichtet werden. Über das Schwenkgelenk könnte dann Flüssigkeit in das Bedienelement eindringen.

Zusätzlich ist es auch oftmals so, dass die Verkabelung für das Bedienelement durch den Tragarm durchgeführt wird, was die Abdichtung und die Ausführung eines Schwenkgelenks ebenfalls erschweren kann.

Die Gebrauchsmusterschrift DE20021626U1 offenbart eine Deckenhalterung zur Befestigung von Bild-Projektoren mit einem Dreh- und Schwenkgelenk gemäß dem Oberbegriff des Anspruchs 1. Es ist daher eine Aufgabe der gegenständlichen Erfindung ein Dreh- und Schwenkgelenk für die Anbindung eines Tragarms an ein Bedienelement anzugeben, das konstruktiv sehr einfach aufgebaut ist, eine einfache Durchführung einer Verkabelung für das Bedienelement erlaubt und eine sichere Abdichtung des Bedienelements sicherstellt.

Diese Aufgabe wird erfindungsgemäß dadurch gelöst, dass das Dreh- und Schwenkgelenk mit einer Drehhülse mit einer axial durchgehenden Ausnehmung und einer damit über eine Schwenkachse verbundenen Schwenkhülse mit einer axial durchgehenden Ausnehmung ausgeführt ist, wobei die Schwenkhülse relativ zur Drehhülse um die Schwenkachse verschwenkbar ist, und am der Schwenkachse abgewandten axialen Ende der Drehhülse eine Drehachse ausgebildet ist und zwischen der Drehhülse und der Schwenkhülse ein Dichtschlauch angeordnet ist, der mit einem ersten axialen Ende dichtend an der Ausnehmung der Drehhülse anliegt und mit dem gegenüberliegenden zweiten axialen Ende dichtend am axialen Ende der Schwenkhülse angeordnet ist. Durch den Dichtschlauch kann der Bereich der Durchführung durch das Dreh- und Schwenkgelenk auf einfache Weise gegen Flüssigkeiten abgedichtet werden. Der Dichtschlauch bildet dabei gleichzeitig auch einen Teil der Durchführung durch das Dreh- und Schwenkgelenk, durch die eine Verkabelung für das Bedienelement durchgeführt werden kann.

Das erste axiale Ende des Dichtschlauchs ist vorteilhafterweise als erster Dichtungsflansch ausgeführt ist, der axial an einer Dichtschulter in der Drehhülse anliegt. Mit einem Dichtungsflansch kann eine definierte Dichtfläche ausgebildet werden, mit der eine Abdichtung auf einfache und sichere Weise hergestellt werden kann. Dazu kann vorgesehen sein, dass eine Andrückscheibe den ersten Dichtungsflansch gegen die Dichtschulter presst. Damit kann eine sehr einfache und gleichzeitig sichere Befestigung des Dichtschlauchs an der Drehhülse hergestellt werden.

Das andere Ende des Dichtschlauchs wird vorzugsweise zweiter Dichtungsflansch ausgeführt ist, der axial an einer der Schwenkachse abgewandten axialen Stirnfläche der Schwenkhülse anliegt. Mit dem Dichtungsflansch kann wiederum eine definierte Dichtfläche ausgebildet werden, mit der eine Abdichtung auf einfache und sichere Weise hergestellt werden kann. Zu besseren Zentrierung und Positionierung kann an der axialen Stirnfläche der Schwenkhülse auch eine axiale Vertiefung zur Aufnahme des zweiten Dichtungsflansches vorgesehen sein.

Wenn der zweite Dichtungsflansch axial von der axialen Stirnfläche der Schwenkhülse vorsteht, kann dieser bei der Montage des Dreh- und Schwenkgelenks zusammengepresst werden, womit eine besonders gute Abdichtung sichergestellt werden kann.

Um einen einfachen Zusammenbau des Dreh- und Schwenkgelenk zu ermöglichen, kann am zweiten axiale Ende des Dichtschlauchs eine Anzahl radial nach innen stehender Stege angeordnet sind. An den Stegen kann der Dichtschlauch einfach ergriffen und durch das Dreh- und Schwenkgelenk gezogen werden.

In einer vorteilhaften, einfachen Ausgestaltung ist das Schwenkgelenk durch zwei Bolzen, die jeweils in fluchtende Lagerbohrungen an der Drehhülse und an der Schwenkhülse gesteckt sind, ausgebildet.

In einer vorteilhaften, einfachen Ausgestaltung das Drehgelenk durch einen Gehäusering, der an der Drehhülse befestigt ist, und einen Tragarmring, der drehbar zwischen dem Gehäusering und einem Anschlag in der Drehhülse angeordnet ist, ausgebildet.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine Ansicht eines Bedienelements mit einem Dreh- und Schwenkgelenk und einem Tragarm,
Fig.2 einen Längsschnitt durch das Dreh- und Schwenkgelenk,
Fig.3 eine Detailansicht des Dreh- und Schwenkgelenks und
Fig.4 eine Ansicht des axialen Endes der Schwenkhülse des Dreh- und Schwenkgelenks.

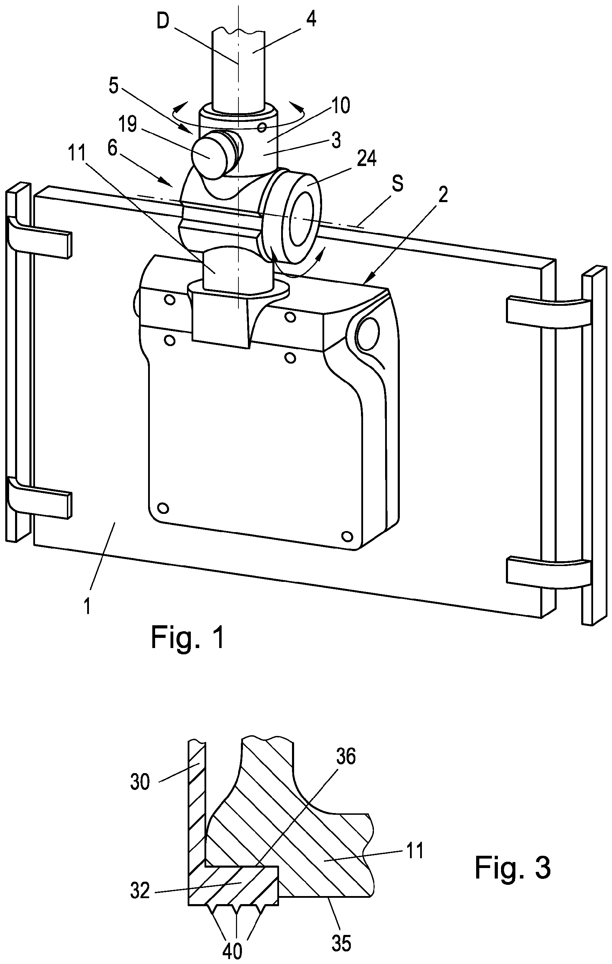

Fig.1 zeigt ein Bedienelement 1 mit einem Aufhängungsteil 2, an dem ein erfindungsgemäßes Dreh- und Schwenkgelenk 3 angeordnet werden kann. Im Dreh- und Schwenkgelenk 3 wird wiederum ein Tragarm 4 befestigt. Der Tragarm 4 kann z.B. an einem ortsfesten Bauteil (nicht dargestellt), wie der Decke oder an einem Maschinenteil, befestigt sein.

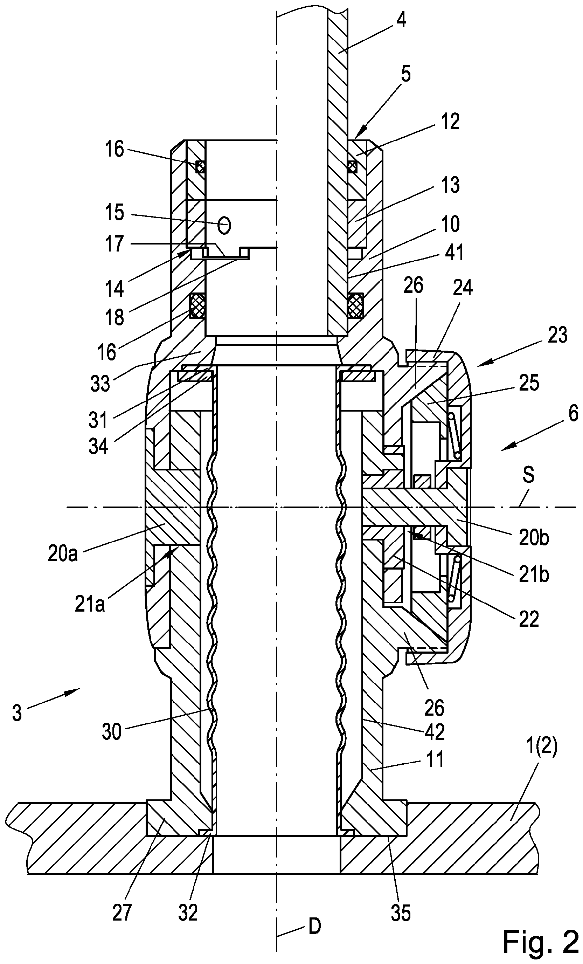

Das Dreh- und Schwenkgelenk 3 umfasst ein Drehgelenk 5 und ein Schwenkgelenk 6. Das Drehgelenk 5 kann beliebig ausgeführt sein und erlaubt das Verdrehen des Dreh- und Schwenkgelenks 3 gegenüber dem feststehenden Tragarm 4 um die Drehachse D des Tragarms 4. Vorteilhafterweise ist das Drehgelenk 5 gemäß der WO 2014/009188 A1 ausgeführt. Das Schwenkgelenk 6 ermöglicht das Verschwenken des Bedienelements 1 um eine Schwenkachse S, die gegenüber der Drehachse D geneigt ist. Für eine gute Verstellbarkeit des Bedienelements 1 ist es sinnvoll, wenn die Schwenkachse S um mindestens 60° und maximal um 120° gegenüber der Drehachse D geneigt ist. Ideal ist es, wenn die Schwenkachse S im Wesentlichen normal auf die Drehachse D steht. Das Dreh- und Schwenkgelenk 3 ist in Fig.2 im Detail als Längsschnitt dargestellt, wobei nur eine Hälfte des Tragarms 4 dargestellt ist.

Das Dreh- und Schwenkgelenk 3 besteht aus einer Drehhülse 10 und einer teilweise darin angeordneter Schwenkhülse 11, die durch das Schwenkgelenk 6 miteinander verbunden sind. Natürlich könnte auch die Drehhülse 10 teilweise innerhalb der Schwenkhülse 11 angeordnet sein. Die Schwenkhülse 11 ist relativ zur Drehhülse 10 verschwenkbar und die Drehhülse 10 ist relativ zum Tragarm 4 verdrehbar. Am dem Schwenkgelenk 6 abgewandten axialen Ende der Drehhülse 10 ist das Drehgelenk 5 ausgebildet, wie nachfolgend beschrieben wird.

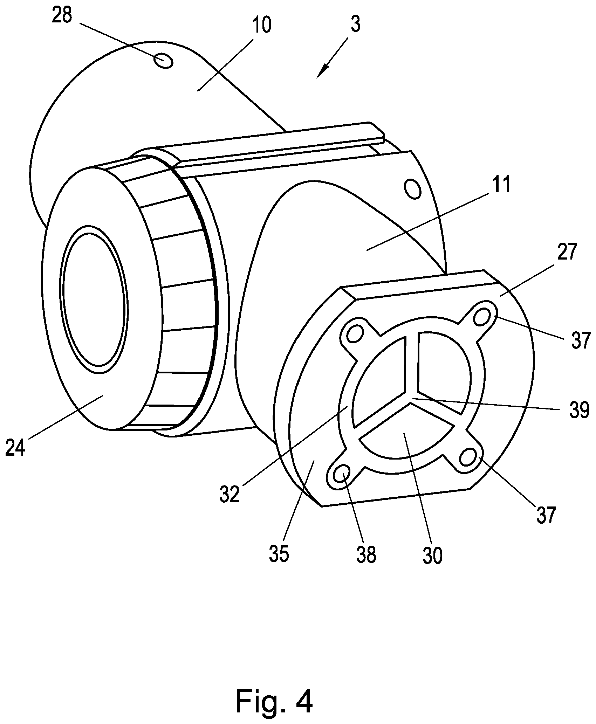

Das Drehgelenk 5 umfasst im Wesentlichen zwei Montageringe, die axial nebeneinander, vorzugsweise axial aneinander anliegend, angeordnet sind. Ein Gehäusering 12 ist am axialen Ende der Drehhülse 10 in der Drehhülse 10 befestigt, beispielsweise durch eine Verschraubung mit der Drehhülse 10 mit einer Schraube 28 (siehe Fig.4). Zwischen dem Gehäusering 12 und einer radialen, nach innen vorspringende Schulter 14 in der Drehhülse 10 ist ein Tragarmring 13 angeordnet, wobei der Tragarmring 13 am Tragarm 4 befestigt ist, z.B. mittels in den Tragarmring 6 geschraubten, radial ausgerichteten Schrauben 15 geklemmt. Der Tragarmring 13 liegt im montierten Zustand mit seiner der Schulter 14 zugewandten axialen Stirnfläche bevorzugt an der Schulter 14 an. Gehäusering 12, Tragarmring 13 und Schulter 14 wirken damit derart zusammen, dass einerseits verhindert wird, dass das Dreh- und Schwenkgelenk 3 vom Tragarm 4 rutscht, und dass andererseits sichergestellt wird, dass das Drehgelenk 5 nicht aus dem Dreh- und Schwenkgelenk 3 herausgezogen werden kann. Gleichzeitig wird dadurch aber die Verschwenkbarkeit um die Drehachse D des Tragarmes 4 sichergestellt, weil sich der Tragarmring 13 zwischen der Schulter 14 und dem Gehäusering 12 verdrehen kann. In der Drehhülse 10 und/oder an der radial inneren Umfangsfläche des Gehäuseringes 12 ist weiters ein Dichtring 16, z.B. ein O-Ring, angeordnet, der abdichtend mit dem Tragarm 4 zusammenwirkt. Der Dichtring 16 verhindert ein Eindringen von Flüssigkeit in das Dreh- und Schwenkgelenk 3 entlang der radial äußeren Umfangsfläche des Tragarms 4. Der Tragarmring 13 kann an dem der Schulter 14 zugewandten axialen Ende auch mit einer axial vorspringenden Nase 17 ausgeführt sein. An der Schulter 14 kann dazu eine axiale, sich in Umfangsrichtung erstreckende Ausnehmung 18 vorgesehen sein, in die die Nase 17 eingreift. Damit kann über die Umfangslänge der Ausnehmung 15 der Drehbereich des Drehgelenks 5 festgelegt werden. Ebenso kann an der Drehhülse 10 ein Arretierungsmittel 19, z.B. in Form einer Schraube, vorgesehen sein, um das Dreh- und Schwenkgelenk 3 an einer bestimmten Position zu fixieren, z.B. mittels einer Schraube zu klemmen (siehe auch Fig.1). Für eine detailliertere Beschreibung des Drehgelenks 5 wird auf die WO 2014/009188 A1 verwiesen.

Es sei aber darauf hingewiesen, dass das Drehgelenk 5 auch anders ausgestaltet sein kann, solange damit ein Verdrehen des Dreh- und Schwenkgelenk 3 um die Drehachse D des feststehenden Tragarms 4 ermöglicht wird.

Die Schwenkachse S wird durch zwei Bolzen 20a, 20b ausgebildet, die durch Lagerbohrungen 21a, 21b in der Drehhülse 10 und in der Schwenkhülse 11 gesteckt sind. Ein durchgehender Bolzen, bzw. zwei verbundene Bolzen 20a, 20b, wäre ebenfalls möglich, würde aber die Durchführung einer Verkabelung erschweren. Wenn sich die Drehachse D und die Schwenkachse S nicht schneiden, wenn also die Schwenkachse S außermittig angeordnet ist, dann wäre ein durchgehender Bolzen aber auch eine Option. Die Lagerbohrungen 21a, 21b sind dabei natürlich entlang der Schwenkachse S fluchtend ausgerichtet. Eine Lagerbohrung 21a, 21b könnte natürlich auch in einem Einsatzteil 22 vorgesehen sein, wobei der Einsatzteil 22 in Ausnehmungen in der Drehhülse 10 und der Schwenkhülse 11 eingesetzt ist. Der Einsatzteil 22 kann zur Einstellung der Schwenkachse S dienen und kann auch eine hinsichtlich Reibung und Verschleiß günstigere Materialkombination ermöglichen. An der Schwenkachse S kann auch eine Arretierung 23 vorgesehen sein, um die Position der Schwenkhülse 11 gegenüber der Drehhülse 10 zu fixieren. Die Arretierung 23 ist beispielsweise als Schraubhülse 24 ausgeführt, mit der ein Reibteil 26 an der Drehhülse 10 und/oder an der Schwenkhülse 11, hier beispielsweise eine schräge Reibfläche, gegen einen damit zusammenwirkenden Reibteil 25 in der Arretierung, beispielsweise eine Reibscheibe 25 mit gegengleicher schräger Reibfläche, gepresst wird. Die Arretierung 23 kann aber natürlich auch beliebig anders ausgebildet sein. Ist die Arretierung 23 gelöst, kann die Schwenkhülse 11 über die Bolzen 20, 21 gegenüber der Drehhülse 10 innerhalb eines vorgesehenen Winkelbereichs um die Schwenkachse S verschwenkt werden.

Am der Schwenkachse S abgewandten axialen Ende der Schwenkhülse 11 ist ein Befestigungsflansch 27 vorgesehen, mit dem das Dreh- und Schwenkgelenk 3 an einem Bauteil des Bedienelements 1, beispielsweise am Aufhängungsteil 2 des Bedienelements 1, befestigt werden kann.

Die Drehhülse 10 und die Schwenkhülse 11 sind radial innen mit einer in Richtung der Drehachse D axial durchgehenden Ausnehmungen 41, 42 ausgeführt, die zumindest teilweise fluchtend angeordnet sind, insbesondere um eine axiale Durchführung einer Verkabelung vom Tragarm 4 zum Bedienelement 1 zu ermöglichen. Um zu verhindern, dass über das Schwenkgelenk 6 eindringende Flüssigkeit über diese Ausnehmungen 41, 42 in das Bedienelement 1 gelangen kann, ist ein Dichtschlauch 30 vorgesehen. Der Dichtschlauch 30 ist dabei mit einem ersten axialen Ende dichtend an einer Dichtfläche der Ausnehmung 41 der Drehhülse 10 angeschlossen und ebenso mit dem gegenüberliegenden zweiten axialen Ende dichtend an einer Dichtfläche im Bereich des von der Schwenkachse S abgewandten axialen Endes der Schwenkhülse 11 angeschlossen. Der Dichtschlauch 30 erstreckt sich damit in Richtung der Drehachse D axial zwischen der Drehhülse 10 und dem Bereich des axialen Endes der Schwenkhülse 11.

Zur Abdichtung kann der Dichtschlauch 30 an beiden axialen Enden einen radial vorspringenden Dichtungsflansch 31, 32 aufweisen. Der der Drehhülse 10 zugewandte erste Dichtungsflansch 31 liegt dichtend an einer Dichtfläche in der Ausnehmung 41 der Drehhülse 10 an. In einer bevorzugten Ausgestaltung liegt der erste Dichtungsflansch 31 axial an einer Dichtschulter 33 in der Ausnehmung 41 der Drehhülse 10 an und wird durch eine Andrückscheibe 34 axial dichtend gegen diese Dichtschulter 33 gepresst. Dazu kann die Andrückscheibe 34 durch Schrauben gegen die Drehhülse 10 gepresst werden. Alternativ könnte auch vorgesehen sein, dass der Dichtungsflansch 31 mit der Drehhülse 10 verklebt wird, oder anderweitig ein dichtender Anschluss hergestellt wird.

Der zweite Dichtungsflansch 32 liegt an einer, der Schwenkachse S abgewandten axialen Stirnfläche 35 der Schwenkhülse 11 an. An der Stirnfläche 35 kann dazu auch eine axiale Vertiefung 36 für den Dichtungsflansch 32 vorgesehen sein, um den Dichtungsflansch 32 besser aufzunehmen und zu zentrieren. Vorzugsweise steht der Dichtungsflansch 32 im nicht montierten Zustand zumindest teilweise axial von der Stirnfläche 35 vor, wie in Fig.3 dargestellt. Wird das Dreh- und Schwenkgelenk 3 nun am Bedienelement 1 befestigt, beispielsweise indem das Dreh- und Schwenkgelenk 3 über den Befestigungsflansch 27 der Schwenkhülse 11 mit einem Teil des Bedienelement 1 axial verschraubt wird, so wird der zweite Dichtungsflansch 32 zwischen Schwenkhülse 11 und dem Bedienelement 1 zusammengepresst. Dadurch kann nicht nur eine Abdichtung der Ausnehmung 42 der Schwenkhülse 11 nach außen erzeilt werden, sondern es kann auch eine sichere Abdichtung zwischen Schwenkhülse 11 und Bedienelement 1 hergestellt werden. Damit kann auch von außen zwischen Dreh- und Schwenkgelenk 3 und Bedienelement 1 keine Flüssigkeit in das Bedienelement 1 eindringen. Dazu können am Dichtungsflansch 32 an der axialen Stirnfläche des Dichtschlauches 30 auch geeignete Dichtlippen 40 vorgesehen sein, um die Dichtwirkung zu erhöhen. Der zweite Dichtungsflansch 32 ist damit im bestimmungsgemäßen Einsatz dichtend zwischen der Schwenkhülse 11 und einem Bauteil des Bedienelements 1 angeordnet.

Fig.4 zeigt eine Ansicht in Richtung des axialen Endes der Schwenkhülse 11. Man erkennt den zweiten Dichtungsflansch 32, der sowohl zur Schwenkhülse 11, als auch zum Bedienelement 1 eine Dichtfläche ausbildet. Weiters sind axiale Gewindebohrungen 38 im Befestigungsflansch 27 der Schwenkhülse 11 zu erkennen, über die das Dreh- und Schwenkgelenk 3 mit einem Bauteil des Bedienelement 1 verschraubt werden kann. Am Dichtungsflansch 32 sind zusätzlich radial vorstehende Laschen 37 im Bereich der Gewindebohrungen 38 vorgesehen, die einer besseren Fixierung und Positionierung des Dichtschlauches 30 ermöglichen sollen.

Am axialen Ende des Dichtschlauches 30 sind zusätzlich radial nach innen stehende Stege 39 vorgesehen, die vorzugsweise miteinander verbunden sind. Diese Stege 39 sollen eine einfachere Montage des Dreh- und Schwenkgelenks 3 ermöglichen. Bei der Montage wird der Dichtschlauch 30 zuerst an der Drehhülse 10 befestigt. Danach wird über den Dichtschlauch 30 die Schwenkhülse 11 gestülpt. Aufgrund des zweiten Dichtungsflansches 32 wird sich der sehr weiche Dichtschlauch 30 verformen und axial zusammenschieben. Um den Dichtschlauch 30 mit dem Dichtungsflansch 32 nun einfach durch die Schwenkhülse 11 axial nach außen ziehen zu können, kann der Dichtschlauch 30 einfach an den Stegen 39 ergriffen werden und durchgezogen werden. Nach der Montage könnten die Stege 39 auch wieder entfernt werden, beispielsweise einfach abgeschnitten werden.

Der Dichtschlauch 30 ist bevorzugt aus einem geeigneten Elastomer gefertigt und an der äußeren Umfangsfläche hermetisch abgeschlossen. Insbesondere muss der Dichtschlauch 30 so ausgeführt sein, dass keine Flüssigkeit von außen in das Innere des Dichtschlauches 30 eindringen kann. Durch den Dichtschlauch 30 kann somit verhindert werden, dass eventuell über die Schwenkachse 6 oder anderweitig eindringende Flüssigkeit in das Innere des Dreh- und Schwenkgelenks 3 und damit weiter in das Bedienelement 1 gelangen kann.

Der Dichtschlauch 30 ist bevorzugt so weich, dass ein Verschwenken der Schwenkhülse 11 um die Schwenkachse S, wodurch auch der Dichtschlauch 30 gebogen wird, ohne merkbaren Widerstand erfolgen kann. Dazu kann auch vorgesehen sein, dass der Dichtschlauch 30 zumindest abschnittsweise als Faltenbalg ausgeführt ist, wie in Fig.2 ersichtlich.

Eine Verkabelung für das Bedienelement 1 kann einfach durch den Dichtschlauch 30 durchgeführt werden. Der Dichtschlauch 30 verlängert damit die axiale Ausnehmung der Gehäusering 12 bis zum axialen Ende der Schwenkhülse 11.

## Patentansprüche

1. Dreh- und Schwenkgelenk mit einer Drehhülse (10) mit einer axial durchgehenden Ausnehmung (41) und einer damit über eine Schwenkachse (S) verbundenen Schwenkhülse (11) mit einer axial durchgehenden Ausnehmung (42), die relativ zur Drehhülse (10) um die Schwenkachse (S) verschwenkbar ist, wobei am der Schwenkachse (S) abgewandten axialen Ende der Drehhülse (10) eine Drehachse (D) ausgebildet ist, **dadurch gekennzeichnet, dass** zwischen der Drehhülse (10) und der Schwenkhülse (11) ein Dichtschlauch (30) angeordnet ist, der mit einem ersten axialen Ende dichtend an der Ausnehmung (41) der Drehhülse (10) anliegt und mit dem gegenüberliegenden zweiten axialen Ende dichtend am axialen Ende der Schwenkhülse (11) angeordnet ist.

2. Dreh- und Schwenkgelenk nach Anspruch 1, **dadurch gekennzeichnet, dass** das erste axiale Ende des Dichtschlauchs (30) als erster Dichtungsflansch (31) ausgeführt ist, der axial an einer Dichtschulter (33) in der Drehhülse (10) anliegt.

3. Dreh- und Schwenkgelenk nach Anspruch 2, **dadurch gekennzeichnet, dass** eine Andrückscheibe (34) den ersten Dichtungsflansch (31) gegen die Dichtschulter (33) presst.

4. Dreh- und Schwenkgelenk nach Anspruch 1, **dadurch gekennzeichnet, dass** das zweite axiale Ende des Dichtschlauchs (30) als zweiter Dichtungsflansch (32) ausgeführt ist, der axial an einer der Schwenkachse (S) abgewandten axialen Stirnfläche (35) der Schwenkhülse (11) anliegt.

5. Dreh- und Schwenkgelenk nach Anspruch 4, **dadurch gekennzeichnet, dass** an der axialen Stirnfläche (35) der Schwenkhülse (11) eine axiale Vertiefung (36) zur Aufnahme des zweiten Dichtungsflansches (32) vorgesehen ist.

6. Dreh- und Schwenkgelenk nach Anspruch 4, **dadurch gekennzeichnet, dass** der zweite Dichtungsflansch (32) axial von der axialen Stirnfläche (35) der Schwenkhülse (11) vorsteht.

7. Dreh- und Schwenkgelenk nach Anspruch 1, **dadurch gekennzeichnet, dass** am zweiten axiale Ende des Dichtschlauchs (30) eine Anzahl radial nach innen stehender Stege (39) angeordnet sind.

8. Dreh- und Schwenkgelenk nach einem der Ansprüche 1 bis 7, **dadurch gekennzeichnet, dass** das Schwenkgelenk (6) durch zwei Bolzen (20a, 20b), die jeweils in fluchtende Lagerbohrungen (21a, 21b) an der Drehhülse (10) und an der Schwenkhülse (11) gesteckt sind, ausgebildet ist.

9. Dreh- und Schwenkgelenk nach einem der Ansprüche 1 bis 7, **dadurch gekennzeichnet, dass** das Drehgelenk (5) durch einen Gehäusering (12), der an der Drehhülse (10) befestigt ist, und einen Tragarmring (13), der drehbar zwischen dem Gehäusering (12) und einem Anschlag (14) in der Drehhülse (10) angeordnet ist, ausgebildet ist.

10. Bedienelement mit einem Dreh- und Schwenkgelenk nach einem der Ansprüche 1 bis 9, das an einem Bauteil des Bedienelements (1) angeordnet ist, **dadurch gekennzeichnet, dass** das zweite axiale Ende des Dichtschlauches (30) dichtend zwischen der Schwenkhülse (11) und dem Bauteil des Bedienelementes (1) angeordnet ist.

## Claims

1. A pivot and swivel joint comprising a rotary sleeve (10) having an axially continuous recess (41) and a swivel sleeve (11) connected thereto via a swivel axis (S) having an axially continuous recess (42), which is swivelable relative to the rotary sleeve (10) about the swivel axis (S), wherein at the axial end of the rotary sleeve (10) facing away from the swivel axis (S) a rotary axis (D) is configured, **characterized in that** a sealing hose (30) is disposed between the rotary sleeve (10) and the swivel sleeve (11), which by a first axial end sealingly abuts at the recess (41) of the rotary sleeve (10) and by the opposite second axial end is sealingly disposed at the axial end of the swivel sleeve (11).

2. The pivot and swivel joint as recited in claim 1, **characterized in that** the first axial end of the sealing hose (30) is implemented as a first sealing flange (31) which axially abuts at a seal shoulder (33) in the rotary sleeve (10).

3. The pivot and swivel joint as recited in claim 2, **characterized in that** a pressure disk (34) presses the first sealing flange (31) against the seal shoulder (33).

4. The pivot and swivel joint as recited in claim 1, **characterized in that** the second axial end of the sealing hose (30) is implemented as a second sealing flange (32) which axially abuts at an axial end face (35) of the swivel sleeve (11) facing away from the swivel axis (S).

5. The pivot and swivel joint as recited in claim 4, **characterized in that** at the axial end face (35) of the swivel sleeve (11) an axial indentation (36) is provided to accommodate the second sealing flange (32).

6. The pivot and swivel joint as recited in claim 4, **characterized in that** the second sealing flange (32) axially protrudes from the axial end face (35) of the swivel sleeve (11).

7. The pivot and swivel joint as recited in claim 1, **characterized in that** at the second axial end of the sealing hose (30) a number of radially inwardly positioned webs (39) are disposed.

8. The pivot and swivel joint as recited in one of claims 1 through 7,
**characterized in that** the swivel joint (6) is formed by two bolts (20a, 20b), each of which are inserted into flush aligned bearing bores (21a, 21b) at the rotary sleeve (10) and at the swivel sleeve (11).

9. The pivot and swivel joint as recited in one of claims 1 through 7,
**characterized in that** the rotary joint (5) is configured by a housing ring (12) attached at the rotary sleeve (10) and by a support arm ring (13) rotatably disposed between the housing ring (12) and a stop (14) in the rotary sleeve (10).

10. A control element having a pivot and swivel joint as recited in one of claims 1 through 9, which is disposed at a component of the control element (1), **characterized in that** the second axial end of the sealing hose (30) is sealingly disposed between the swivel sleeve (11) and the component of the control element (1).

## Revendications

1. Pivot et joint articulé avec une douille rotative (10) comportant une cavité axiale (41) et une douille pivotante (11) liée à un axe de pivotement (S) avec une cavité axiale (42) pouvant pivoter autour de l'axe de pivotement (S) par rapport à la douille rotative (10), où un axe de rotation (D) est formé au niveau de l'axe de pivotement (S) de l'extrémité axialement éloignée de la douille rotative (10),
**caractérisé en ce qu'**un bourrelet d'étanchéité (30) est disposé entre la douille rotative (10) et la douille pivotante (11), qui est juxtaposé de façon étanche à la cavité axiale (41) avec une première extrémité axiale, et est disposé de façon étanche contre l'extrémité axiale de la douille pivotante (11) avec la deuxième extrémité axiale située en face.

2. Pivot et joint articulé selon la revendication 1, **caractérisés en ce que** la première extrémité axiale du bourrelet d'étanchéité (30) est réalisée sous forme d'une première bride d'étanchéité (31) juxtaposée axialement à un épaulement d'étanchéité (33) dans la douille rotative (10).

3. Pivot et joint articulé selon la revendication 2, **caractérisés en ce qu'**une plaque de butée (34) presse la première bride d'étanchéité (31) contre l'épaulement d'étanchéité (33).

4. Pivot et joint articulé selon la revendication 1, **caractérisés en ce que** la deuxième extrémité axiale du bourrelet d'étanchéité (30) est réalisée sous forme d'une deuxième bride d'étanchéité (32) juxtaposée à une surface avant axiale (35) de la douille pivotante (11) détournée de l'axe de pivotement (S).

5. Pivot et joint articulé selon la revendication 4, **caractérisés en ce qu'**au niveau de la surface avant axiale (35) de la douille pivotante (11) est munie d'un creux axial (36) destiné à accueillir la deuxième bride d'étanchéité (32).

6. Pivot et joint articulé selon la revendication 4, **caractérisés en ce que** la deuxième bride d'étanchéité (32) est saillante à l'avant de la surface avant axiale (35) de la douille pivotante (11).

7. Pivot et joint articulé selon la revendication 1, **caractérisés en ce qu'**au niveau de la deuxième extrémité axiale du bourrelet d'étanchéité (30) est disposé un certain nombre d'entretoises (39) disposées radialement vers l'intérieur.

8. Pivot et joint articulé selon l'une quelconque des revendications 1 à 7, **caractérisés en ce que** le joint articulé (6) est constitué de deux boulons (20a, 20b) fichés respectivement dans des alésages (21a, 21b) qui coïncident sur la douille rotative (10) et la douille pivotante (11).

9. Pivot et joint articulé selon l'une quelconque des revendications 1 à 7, **caractérisés en ce que** le pivot (5) est constitué d'une bague de boîtier (12) qui est fixée à la douille rotative (10) et d'une bague de bras de support (13) disposée de façon pivotante entre la bague de boîtier (12) et une butée (14) dans la douille rotative (10).

10. Élément de commande avec un pivot et joint articulé selon une des revendications 1 à 9, qui est disposé au niveau d'une pièce de l'élément de commande (1), **caractérisé en ce que** la deuxième extrémité axiale du bourrelet d'étanchéité (30) est disposée de façon étanche entre la douille pivotante (11) et la pièce de l'élément de commande (1).
